# NEW EUROPEAN PATENT SPECIFICATION

(11) **EP 3 243 885 B2**
(45) Date of publication and mention of the opposition decision: **30.10.2024**
(45) Mention of the grant of the patent: 04.08.2021
(21) Application number: 16169286.8
(22) Date of filing: 12.05.2016
(51) Int. Cl.: C09J 7/10, C09J 5/06, B62D 27/02

(54) **STRUCTURAL ADHESIVE FILM**
STRUKTURKLEBSTOFFFILM
FILM ADHÉSIF STRUCTUREL

(43) Date of publication of application: 15.11.2017
(73) Proprietor: 3M Innovative Properties Company, Saint Paul, MN 55133-3427 (US)
(72) Inventor: Koch, Bernhard, 41464 Neuss (DE); Yavuz, Nurettin, 40223 Düsseldorf (DE); Cura, Elisabeth, 40223 Düsseldorf (DE)
(74) Representative: Mathys & Squire

(56) References cited:
- EP-A1- 2 727 664
- EP-A1- 2 918 650
- WO-A1-03/099953

## Description

The invention relates to a structural adhesive film as defined in claim 1. The invention also relates to a method of bonding panels to a panel assembly. And the invention relates to the use of a structural adhesive film for making a panel assembly.

Joints, e. g. metal joints, in vehicles may be formed through the use of an adhesive. For example, an adhesive may be used to bond a panel, for example a metal panel of a roof panel to a support structure or chassis of the vehicle. Further, an adhesive may be used in joining two panels, e. g. metal panels, of a vehicle closure panel assembly. Vehicles closure panel assemblies typically comprise an assembly of an outer and an inner panel, e. g. metal panel, whereby a hem structure is formed by folding an edge of an outer metal panel over and edge of the inner panel. Typically, an adhesive is provided there between to bond the two panels together. Further, a sealant typically needs to be applied at the joint of the panels to provide for sufficient corrosion protection. For example, US 6,000,118 discloses the use of a flowable sealant bead between the facing surfaces of two panels, and a thin film of uncured paint-like resin between a flange on an outer panel and the exposed surface of an inner panel. The paint film is cured to a solid impervious condition by a baking operation performed on the completed door panel. US 6,368,008 discloses the use of an adhesive for securing two metal panels together. The edge of the joints is further sealed by a metal coating. WO 2009/071269 discloses an expandable epoxy paste-like adhesive as a sealant for a hem flange. A further hemmed structure is disclosed in US 6,528,176.

Further efforts have been undertaken in order to develop adhesive compositions whereby two panels, e. g. metal panels, in particular an outer and an inner panel of a vehicle closure panel, could be joined with an adhesive without the need for further material for sealing the joint. Thus, it became desirable to develop adhesive systems that provide adequate bonding while also sealing the joint and providing corrosion resistance. A partial solution has been described in e. g. WO 2007/014039, which discloses a thermally expandable and curable epoxy-based precursor of a toughened foamed film comprising a mixture of solid and liquid epoxy resins, and claimed to provide both favourable energy absorbing properties and gap filling properties upon curing.

EP 2727664 A1 describes a method of making a metal panel assembly, the method comprising: providing a first metal panel having a first body portion and a first flange along a margin of the first body portion adjacent a first end of the first body portion; providing a second metal panel having a second body portion and a second flange along a margin of the second body portion adjacent a second end of the second body portion; providing an elongate adhesive sheet having a first portion near a first end of the width of the elongate adhesive sheet and a second portion near a second end opposite to the first end of the elongate adhesive sheet, the elongate adhesive sheet comprising a thermosettable composition, the elongate adhesive sheet having on at least one major surface a plurality of microstructures; applying the elongate adhesive sheet to said first or second metal panel; folding the first flange of the first panel over said second flange of said second panel; whereby a metal joint is obtained wherein the elongate adhesive sheet is folded such that the first portion of the elongate adhesive sheet is between the second flange of said second panel and said first body portion of said first panel and the second portion of the elongate adhesive sheet is between said first flange of said first panel and said second flange of said second panel; - heating the metal joint so as to cause thermosetting of the thermosettable composition of the elongate adhesive sheet, thereby adhering said first and second metal panel and sealing the metal joint.

Furthermore, WO 03/099953 A1 discloses a curable adhesive article comprising: a curable adhesive layer having a plurality of microstructures or macrostructures forming at least a portion of a first outermost surface of the curable adhesive layer, wherein the first outermost surface of the curable adhesive layer (i) has sufficient tackiness to bond to a substrate, and (ii) cures to a structural state so as to substantially retain an initial structured surface profile when exposed to temperatures greater than about 37 °C.

Also, EP 2918650 A1 describes a double-sided adhesive sheet for image display device which can be bonded to the adhesion surface in close contact without space therebetween although there is a step due to printing or the like on the adhesion surface to be bonded to the adhesive sheet. The double-sided adhesive sheet for image display device 1 of the invention is a sheet to bond any two adherends selected from a surface protective panel 2, a touch panel 3, and an image display panel, and the sheet is characterized in that at least one of the adherends (surface protective panel 2) has a stepped portion 2b on an adhesion surface 2a to adhere to the double-sided adhesive sheet 1 and the surface shape of the bonding surface 1a of the double-sided adhesive sheet 1 to be bonded to the adhesion surface 2a is shaped in accordance with the surface shape of the adhesion surface 2a.

Without contesting the technical advantages associated with the adhesive compositions and systems disclosed in the art, there is still a need for a high performance structural adhesive film for bonding panels, e. g. metal or composite panels, that combines excellent physical properties such as from stability, flexibility, robustness and handling properties in uncured state; as well as excellent bonding and sealing performance after curing.

In addition, in some instances it is possible that the panels or plates, e. g. a hemmed metal panel assembly, with an uncured and unexpanded structural adhesive film according to the invention in between the two panels passes one or several bath(s) before being put into a curing oven. During this process step, liquid may enter a space between the two panels next to the adhesive film. During the following curing process, when heat gets applied, the liquid may get gaseous and may try to escape. This process might impact the appearance and also the sealing function of the cured structural adhesive film.

Furthermore, car manufacturers prefer that the adhesive film used for connection the two panels of a hem completely covers the outer edge of the outer panel that is hemmed over an edge of the inner panel. In addition, it is required that the adhesive film that covers the outer edge provides a good visual appearance. Therefore, it is an object of the present invention to protect the outer edge of the outer panel with the adhesive it-self. The outer panel edge has to be covered and moreover has to present a good visual appearance.

In view of the above, there is an additional need for an improved structural adhesive film that combines the above mentioned properties with covering the edge of an outer panel and to present a good visual appearance of the expanded film after cure.

In the context of the invention an adhesive film that "covers the outer panel" edge after cure is defined as a film that covers completely the outer edge or a panel. If for example the panel has a thickness of 1 mm, the complete 1 mm edge should be covered by the adhesive film after cure.

In the context of the invention an adhesive film with a "good visual appearance" is defined as a film having a smooth surface that extends essentially linear and essentially parallel to the edge of the panels it is bonding. In addition, to the linear and parallel extension of the film, a film with a good appearance has a smooth surface that is essentially free from irregularities like bubbles or entrapped gas. In other words, a good visual appearance means that the expanded tape after cure has a substantially smooth surface without traces of bubbles.

According to one aspect, the present invention provides a structural adhesive film according to claim 1.

Thus, the claimed invention is directed to a structural adhesive film with at least two different thicknesses. A film that provides different thicknesses along its extension in the cross direction provides the advantage that it provides more material in certain areas. This allows for specific applications to position the tape such that in areas where more material is beneficial more material is provided.

One possible area, where a structural adhesive film according to the invention may get applied are panel assemblies, e. g. metal panel assemblies, with a so called hem flange connection, wherein the outer edge of one panel, e. g. a metal panel, is bend around the outer edge of the other panel, e. g. a metal panel or a composite material panel. In these kind of connections a structural adhesive may be used to bond the two panels to each other. In this specific application it may be beneficial to provide more material of the film in certain areas, e. g. in the central area of the film in a cross direction. This additional material may for example be used to fill a gap that might exist between the two panels before the adhesive film is cured. This gap filling provides the advantage, that if the panel assembly needs to go through a bath before being cured, no water can enter this gap. Having the water stay outside of the panel assembly may prevent the generation of gas in a later heating or curing step. If no gas is generated inside the panel assembly, e. g. inside the hem flange connection no gas needs to escape through the curing adhesive film, which is beneficial for the visual appearance of the film after cure. The amount of the additional material may depend on the specific application of the structural adhesive film. One possible application is a hem flange bonding application, where the structural adhesive tape is used to bond to panels to each other that are connected over a hem flange. Depending on the distance between the inner panel and the bend around outer panel additional material might be needed to fill the gap between the two panels. The amount of the additional material may also depend on the tolerances allowed in the specific application or on other bond line variations. The bigger the distance and the bigger the tolerances the more material might be needed to fill the existing gaps. A typical tolerance in a hem flange application may be between 0.5 and 3.5 mm. All other body in white applications are possible as well.

The term "film" used throughout the present description relates to two-dimensional articles which are usually referred to as strips, foils, bands, sheets, sheeting or the like. A film usually provides a first major upper surface and a second major lower surface, where in the upper surface and the lower surface are opposing surfaces of the film. In a two-dimensional film the first and the second major surface of the film extend essentially parallel to each other. The film according to the invention provides a third dimension, such that the film not only extend in the x and y axis but also in a third direction, which is the z axis.

The film may be provided in pre-cut pieces (die-cut) or as a tape wound on a roll, e. g. a level wound roll.

The term "distance" used throughout the present description relates to the shortest possible distance between two points. The distance between two geometric objects is the shortest possible distance between those objects, which is the distance between the two closes points of the geometric objects.

It has been found that a structural adhesive film comprising an epoxy compound as well as an epoxy curing agent provides a good basis for a high performance structural adhesive film that combines excellent physical properties such as form stability, flexibility, robustness and handling properties in uncured state, as well as excellent bonding and sealing performances after curing. In addition, the structural adhesive film of the present invention is particularly suitable for automated handling and application, in particular by fast robotic equipment.

The epoxy compound may have an equivalent weight of less than 250 g/equivalent. Suitable epoxy compounds for use herein will be easily identified by those skilled in the art in the light of the present description. The epoxy compound for use herein is preferably selected from the group of epoxy compounds having an average epoxy functionality, i.e. an average number of polymerizable epoxy groups per molecule, of at least two and, more preferably, from two to four.

Epoxy compounds which are useful in the structural adhesive film are preferably derived from bisphenol A, bisphenol E, bisphenol F, bisphenol S, aliphatic and aromatic amines, such as methylene dianiline and aminophenols, and halogen substituted bisphenol resins, novolacs, aliphatic epoxies, and combinations thereof and/or there between. More preferably, the organic epoxies are selected from the group comprising diglycidyl ethers of bisphenols A and bisphenol F and epoxy novolacs.

These epoxy compounds are generally liquid, or semi-liquid, at room temperature and are frequently also referred to as reactive epoxy thinners or reactive epoxy diluents. These compounds are preferably selected from the group of optionally substituted di- and polyglycidyl ethers of di- and polyphenols or aliphatic or cycloaliphatic hydroxyl compounds. Suitable epoxy compounds for use herein are commercially available from Momentive under tradename Epicote TM 828; from Dow Chemical Co. under tradename DER 331, DER 332 and DER 334; from Resolution Performance Products under tradename Epon^{®} 828; from Polysciences, Inc. under tradename Epon^{®} 825/ 826/ 830 /834/ 863/ 824; from Hexion under tradename Bakelite^{®} EPR 164; from Huntsman under tradename Araldite^{®} GY 259/260; or from Leuna Harze under tradename EPILOX^{®} A 1900.

The amount of epoxy compound in the composition of the structural adhesive film is typically comprised between 30 and 60 wt. %, preferably between 40 and 60 wt. %, more preferably between 50 and 60 wt. %, based on total weight of the composition.

The composition of the structural adhesive film according to the present invention further comprises an epoxy curing agent. Any epoxy curing agent, commonly known in the art, may be used. Suitable epoxy curing agents for use herein are materials that react with the oxirane ring of the organic epoxide to cause substantial cross-linking of the epoxide. These materials contain at least one nucleophilic or electrophilic moiety (such as an active hydrogen atom) that causes the cross-linking reaction to occur. Epoxy curing agents are distinct from epoxide chain extension agents, which primarily become lodged between chains of the organic epoxide and cause little, if any cross-linking. Epoxy curing agents as used herein are also known in the art as epoxy hardeners, epoxide hardeners, catalysts, epoxy curatives, and curatives.

Sometimes, differentiation is made between epoxy curing agents and accelerators which are used to increase the rate of the epoxide curing reaction. Accelerators typically are multifunctional materials which can also be classified as epoxy curing agents. Therefore, in the present specification, no differentiation is made between curing agents and accelerators.

Epoxy curing agents for use herein include those which are conventionally used for curing epoxy resin compositions and forming crosslinked polymer networks. Suitable epoxy curing agents may also be referred to as latent curing agents, which are typically chosen so that they do not react with the epoxy resin until the appropriate processing conditions are applied. Such compounds also include aliphatic and aromatic tertiary amines such as dimethylaminopropylamine and pyridine, which may act as catalysts to generate substantial crosslinking. Further, boron complexes, in particular boron complexes with monoethanolamine, imidazoles such as 2-ethyl-methylimidazole, guanidines such as tetramethyl guanidine, dicyanodiamide (often referred to as DICY), substituted ureas such as toluene diisocyanate urea, and acid anhydrides such as the 4-methyltetrahydroxyphthalic acid anhydride, 3-methyltetrahydroxyphthalic acid anhydride and methylnorbornenephthalic acid anhydride, may be employed. Still other useful epoxy curing agents include polyamines, mercaptans and phenols. Other epoxy curing agents for use herein include encapsulated amines, Lewis acids salts, transition metal complexes and molecular sieves. Preferably, the epoxy curing agent is selected from the group consisting of amines, acid anhydrides, guanidines, dicyandiamide and mixtures thereof. More preferably, the epoxy curing agent contains dicyandiamide. Suitable epoxy curing agents for use herein are commercially available from Air Products under tradename Amicure^{®} CG-1200.

According to one embodiment of the invention, the distance between the two opposing major surfaces may change stepwise along the cross direction of the film. It is also possible that the distance between the two opposing major surfaces changes continuously along the cross direction of the film. Providing a changing distribution of material along the cross direction of the film provides the advantage of providing the right amount of material where it is needed. It is also possible to provide a changing distribution of material along the longitudinal extension of the film. Any kind of geometry or shape is possible that provides a changing amount of material along a cross section of the film.

The distance d1 of the film according to the invention may range from 100 to 400 µm and the distance d2 of the film according to the invention may range from 110 to 800 µm. Depending on the specific use or application of the film according to the invention different ranges are possible. The above mentioned ranges have been tested in a hem flange application of a metal panel assembly and have shown good results. The film may also depending on the specific use or application of the tape also provide more than two different distances along its cross extension.

The area where the distance between the two major surfaces of the film corresponds to the larger distance d2 may be arranged in the middle of the cross-section of the film. It is also possible that the area where the distance between the two major surfaces of the film corresponds to the larger distance d2 is arranged at one side of the cross-section. Thus, the adhesive film according to the invention may provide a symmetrical cross-section or it may provide a cross-section that is not symmetrical.

The structural adhesive film according to the invention provides a second adhesive layer extending adjacent to the first adhesive layer. The tape according to the invention may thus be produced by providing two layers of an adhesive and stacking them over each other. It is also possible to extrude a film according to the invention with one of the geometries described above.

The width of the second adhesive layer of the structural adhesive film according to the invention is smaller than the width of the first adhesive layer. It is possible to obtain a film according to the invention by stacking the two layers on top of each other. If the two layers of the adhesive each provide a constant thickness, the film comprising the two layers provides at least two different thicknesses.

The two layers of the structural adhesive film according to the invention may provide the same chemical composition or they may provide a different chemical composition. By providing several layers and each layer providing a different chemical composition it is possible to adapt the features of the tape to a specific application. The layers may differ for example in their curing temperature or in the temperature where they expand. This may lead to a tape that cures or expands quicker in certain areas of the tape than in other areas. Generally every layer may comprise a different function and therefore a different composition. This possibility allows to adapt the tape very good to each application.

The structural adhesive film according to the invention may comprise at least one layer with a porous structure. A structural adhesive film with a layer with a porous structure may provide the additional advantage of improving the stability of the structural adhesive film, which leads to more robust covering of the outer edge of one panel to be bonded. The porous layer may also provide a conformability to the structural adhesive film, which may be for example used to pre-form the structural adhesive film, before it is applied to any one of the panels and thereby it is much more suitable for automated handling and application, in particular by fast robotic equipment. Finally the porosity of the layer may help the above mentioned gas that may be generated during the curing step, to escape out of a space between two panels next to the film. The porosity or the layer may also help to absorb the adhesive from the adhesive layer during the curing process. Each one of these properties of the layer may lead to a good covering of the outer edge of the panel and to a good appearance of the tape after curing. The layer with a porous structure may for example be a porous carrier layer.

The porous layer may be a malleable scrim or mesh with a lower density. The lower density leads to a porosity of the layer with the above mentioned advantages. The porous layer may also be a wipe, e. g. a spunlaced wipe. Spunlacing is also called hydroentanglement. It is a bonding process for wet or dry fibrous webs made by either carding, air-laying or wet-laying, the resulting bonded fabric being a non-woven. It uses fine, high pressure jets of water which penetrate the web, if transported by a belt or wire, hit the conveyor belt or conveyor wire and bounce back causing the fibers to entangle with each other. This process can also be considered as a two-dimensional equivalent of spinning fibers into yarns prior to weaving. In other words the hydroentangled bonding technology is a system in which water is emitted under high pressure and velocity from closely positioned nozzles onto a web of loose fibers. The intensity of the water stream and the pattern of the supporting drum or belt entangle, spin and curl the web's fibers about one another. The entangling of the fibers and the friction between the web's fibers yields a cohesive web. The water pressure has a direct bearing on the strength of the web, and very high pressures not only entangle but can also split fibers into micro- and nano-fibers which may give the resulting hydroentangled non-woven a leather like or even silky texture. This type of non-woven can be as strong and tough as woven fabrics made out of the same fibers.

Other preferred properties of the porous layer may be a high softness and flexibility. These properties help to apply the film in an easy manner, even in areas with more complex geometries. Another preferred property of the porous layer is a good drapability. A further requirement of a porous layer according to the invention is a sufficient strength and the requirement to withstand the temperatures in a curing oven, which may for example be up to 180 °C, e. g. 120 °C.

The at least one adhesive layer of the structural adhesive tape according to the invention comprises an epoxy compound, an epoxy curing agent, a thermoplastic resin and a toughening agent.

In a preferred aspect, thermoplastic resin for use herein may have a softening point comprised between 30 °C and 140 °C, preferably between 80 °C and 100 °C, more preferably between 85 °C and 95 °C. Suitable thermoplastic resins for use herein will be easily identified by those skilled in the art, in the light of the present description. Suitable thermoplastic resins for use herein are preferably selected from the group consisting of polyether thermoplastic resins, polypropylene thermoplastic resins, polyvinyl chloride thermoplastic resins, polyester thermoplastic resins, polycaprolactone thermoplastic resins, polystyrene thermoplastic resins, polycarbonate thermoplastic resins, polyamide thermoplastic resins, and any combinations of mixtures thereof. The amount of thermoplastic resin in the composition of the structural adhesive film is typically comprised between 10 and 50 wt. %, preferably between 15 and 30 wt. %, more preferably between 20 and 30 wt. %, based on total weight of the composition.

Any toughening agent, commonly known in the art, may be used in the composition of the structural adhesive film of the invention. The toughening agents are preferably selected from a group comprising core-shell toughening agents, CTBNs (carboxyl and/or nitrile terminated butadiene/nitrile rubbers) and high molecular weight amine terminated polytetramethylene oxide, or dimer acid functionalised epoxy. The toughening agents are preferably selected from a group comprising core-shell toughening agents, like Paraloid(TM) 2650J from Dow, Paraloid^{™} 2690 supplier Dow, Kane Ace(TM) M521, Kane Ace(TM) M711, Kane Ace(TM) M721, Kane Ace(TM) MX 257 Kane Ace(TM) MX153 from Kaneka, or Clearstrength ^{™} products from Arkema. The core shell is based on methacrylate-butadiene-styrene copolymers or methacrylate-butadiene copolymers (MBS). Alternative core shell material are acrylic impact modifiers from Arkema, with products from the trade name Durastrengths. CTBNs (carboxyl and/or nitrile terminated butadiene/nitrile rubbers) and high molecular weight amine terminated polytetramethylene oxide, or dimer acid functionalised epoxy. The toughening agent may also be carboxyl terminated butadiene acrylonitrile.

According to another aspect of the invention, the at least one adhesive layer may comprises an epoxy compound, a thermoplastic resin, an epoxy curing agent and in addition at least one component comprising at least one epoxy moiety and at least one linear or branched alkyl group and/or at least one mineral filler, wherein the at least one mineral filler is capable of absorbing water. The combination of these components provides an adhesive with excellent corrosion resistance.

The at least one mineral filler may be selected from the group consisting of metal oxides and metal hydroxides, preferably selected from the group of CaO, BaO, K₂O, Li₂O, Na₂O, SiO₂, SrO, MgO and mixtures thereof. The mineral filler may be CaO and/or SiO₂, and/or talc (hydrated magnesium silicate), and/or CaCO₃ preferably a blend comprising CaO and SiO₂.

The at least one adhesive layer may also comprise at least one further filler selected from the list of carbon black, graphite, a mineral carbon source, glass beads, glass chips, metal chips, metal flakes, preferably graphite glass beads, glass chips, more preferably graphite, even more preferably graphite flakes. The additional fillers may comprise thermally expandable graphite, and more preferably thermally expandable graphite flakes.

According to another aspect of the invention, the at least one adhesive layer comprises an epoxy compound, an epoxy curing agent and an acrylic polymer. As the acrylic polymers, acrylic copolymer which including nitrogen containing vinyl monomer and alkyl acrylic ester monomer may be used. The nitrogen containing vinyl monomer may be preferably selected from a group comprising dimethyl acryl amide, N-vinyl pyrrolidone, N-vinyl caprolactam and Acryloyl morpholine. The alkyl acrylic ester may be preferably selected from a group comprising butyl acrylate, 2-ethyl hexyl acrylate and iso-octyl acrylate.

The structural adhesive film according to the invention may further comprise a blowing agent. Any blowing agents, commonly known in the art, may be used in the composition of the structural adhesive film of the invention. By including a blowing agent in the composition of the structural adhesive film, the structural adhesive film becomes heat expandable and may be referred to as an expandable structural adhesive film. Accordingly, by heating, for example during the heating to cause curing of the adhesive sheet, the structural adhesive film expands which helps sealing of any gap in the panel joint. The one or more blowing agents may be selected from the group of non- encapsulated and/or encapsulated blowing agents.

The composition of the adhesive layer according to the invention may optionally comprise further components, additives or agents. Other optional ingredients that may advantageously be incorporated into the composition include wetting agents such as those selected from the group consisting of titanates, silianes, zironates, zircoaluminates, phosphoric ester(s) and mixtures thereof. The wetting agent improves the mixability and processability of the composition and can also enhance the composition's handling characteristics. The composition of the adhesive layer according to the invention may be a thermosettable composition.

Other optional ingredients which may be used include additives, agents or performance modifiers such as e. g. flame retardants, impact modifiers, heat stabilizers, colorants, processing aids, lubricants, and reinforcing agents.

The composition of the adhesive layer may also comprise one or more fillers which may be used to regulate rheological properties of the precursor and adjust its viscosity to improve and adjust its processability for specific applications. Preferred fillers for use herein are selected from the group consisting of filler particles, microspheres, expandable microspheres, preferably pentane filled expandable microspheres or gaseous cavities, glass beads, glass microspheres, hydrophobic silica type fillers, hydrophilic silica type fillers, fumed silica, fibers, electrically and/or thermally conducting particles, nano-particles, and any combinations thereof.

It is also possible that the adhesive layer according to the invention comprises a melt-flowable composition that comprises an epoxy resin and a thermoplastic polymer having one or more functional groups capable of reacting with an epoxy material. The thermoplastic polymer may be a semi-crystalline polymer or an amorphous polymer having a glass transition temperature above -30 °C according to DSC measurement (DSC, dynamic scanning calorimetry, DIN EN ISO 11357-1). The thermoplastic polymer may comprise a polyvinylacetal or a polyester. It may also comprise a polyvinylbutyral. The melt-flowable and composition may further comprise an acrylic polymer.

It is also possible that the adhesive layer according to the invention comprises a mixture of a first and second epoxy compound and an epoxy curing agent, wherein the first epoxy compound has a weight average molecular weight of at least 1000 g/mol and has an amount of epoxy groups of between 5 and 10 mole % and the second epoxy compound has a weight average molecular weight of not more than 400 g/mol and wherein the weight ratio of first to second epoxy compound is between 0.8 and 4.

The structural adhesive film according to the invention may be readily prepared by a number of techniques. For example, the various components may be added under ambient conditions to a suitable internal mixing vessel, such as a Mogul mixer. The mixing temperature is not critical and the mixing of the first and second epoxy components and the optimal toughening agent component is typically performed at a temperature of 80 - 85 °C. When the epoxy curing agent component and the optional blowing agent component is added the temperature may preferably be decreased to not more than 70 °C. Mixing is continued until the components form a homogenous mixture, after which time the composition is removed from the mixer.

Due to their excellent processability the composition can be processed as a film by conventional application equipment such as extruders or hot-melt coaters. The composition may be processed as a self-supporting film or may alternatively be coated/laminate onto a suitable liner, such as e. g. a siliconized liner. The structural adhesive film of the invention may be applied to various substrates such as, for example metals (for example, Al, Al alloys, titanium or stainless steel) or other substrates comprising, for example, glass boron, carbon, Kevlar fibers, epoxy phenols, cyanate esters or polyester matrices.

The structural adhesive film according to the invention is typically a soft conformable film, and may or may not be tacky at room temperature. Prior to curing, the structural adhesive film is preferably deformable and drapable so that it can be applied to curved surfaces and assume any two-dimensional shape. The thickness of the structural adhesive film material may vary widely.

The invention also provides a method of bonding panels together to form a panel assembly, the method comprising the following steps:
- providing a first and a second panel;
- providing a structural adhesive film as described above;
- adhering said first panel and said second panel to each other by using the structural adhesive film, wherein the temperature is below the activation temperature of the structural adhesive film; and
- heating the panel assembly at a temperature above the activation temperature of the structural adhesive film.

In a preferred aspect of the methods according to the invention, the panels are automobile panels joined together at an edge, so as to form a so-called hemmed structure or a hem flange. Accordingly, in one preferred aspect of the method according to the invention, it is provided a method for hem flange bonding of metal parts, wherein:
- the structural adhesive film has a first portion near a first end of the structural adhesive film and a second portion near the second end opposite to the first end of the structural adhesive film;
- the first metal part comprises a first metal panel having a first body portion and a first flange portion along a margin of the first body portion adjacent a first end of the first body portion;
- the second metal part comprises a second metal panel having a second body portion and a second flange portion along a margin of the second body portion adjacent a second end of the second body portion;
wherein the method comprises the steps of:
a) adhering the structural adhesive film to the first metal panel or second metal panel at a temperature below the activation temperature of the epoxy curing agent, whereby following adhering and folding, a metal joint is obtained wherein the structural adhesive film is folded such that:
   i. the first portion of the structural adhesive film is provided between the second flange of the second metal panel and the first body portion of the first metal panel, and
   ii. the second portion of the structural adhesive film is provided between the first flange of the first metal panel and the second body portion of the second metal panel; and
b) heating the metal joint at a temperature above the activation temperature of the epoxy curing agent.

Preferably, the structural adhesive film is adhered to the second metal panel with the structural adhesive film being adhered to the second flange of the second metal panel and folded around the second end of the second metal panel such that the structural adhesive film is adhered to opposite sides of the second flange of the second metal panel.

In a particular embodiment, one of the metal parts is a roof panel and the other metal part is a support structure, for example the chassis of the vehicle. The metal parts and panels are typically steel parts and panels but other metal parts and panels such as aluminium parts and panels may be used as well in connection with the invention. In a particular embodiment, the metal parts are unpainted, i.e. they are body in white parts as they are known or called in the automotive industry. It is also possible to use panels that are made out of composite materials.

Typically the joint of the metal panels for a vehicle closure panel is formed early in the manufacturing process where the panels are often contaminated for example with grease or oil. The structural adhesive film used in connection with the method typically allows bonding of the metal parts and panels to an adequate level while also providing good sealing properties on the joint thereby providing corrosion resistance.

Finally the invention also provides the use of a structural adhesive film as described above for bonding panels together to form a panel assembly, wherein the panels are bond to each other through a hemmed structure and wherein the structural adhesive is positioned between the two panels in the hemmed structure and fills the space between the two panels in the hemmed structure before the structural adhesive film is cured.

The invention will now be described in more detail with reference to the following Figures exemplifying particular embodiments of the invention:
- Fig. 1: is a cross-sectional view of an inner panel with a structural adhesive film according to the prior art applied thereto and an outer panel before joining it with the inner panel;
- Fig. 2: is a cross-sectional view of the inner and outer panel of Figure 1 after joining the two panels;
- Fig. 3: is a three dimensional view of a structural adhesive film;
- Fig. 4: is a cross-sectional view of the structural adhesive film according to Figure 3 along the line IV-IV;
- Fig. 5: is a cross-sectional view of a structural adhesive film;
- Fig. 6: is a cross-sectional view of yet another embodiment of a structural adhesive film not according to the invention;
- Fig. 7: is a cross-sectional view of an inner panel with a structural adhesive film according to one embodiment of the invention applied thereto;
- Fig. 8: is a cross-sectional view of an inner and an outer panel with a structural adhesive film according to the invention after joining the two panels;
- Fig. 9: is a cross-sectional view of another embodiment of a structural adhesive film according to the invention and
- Fig. 10: is a cross-sectional view of yet another embodiment of a structural adhesive film not according to the invention.

Herein below various embodiments of the present invention are described and shown in the drawings wherein like elements are provided with the same reference numbers.

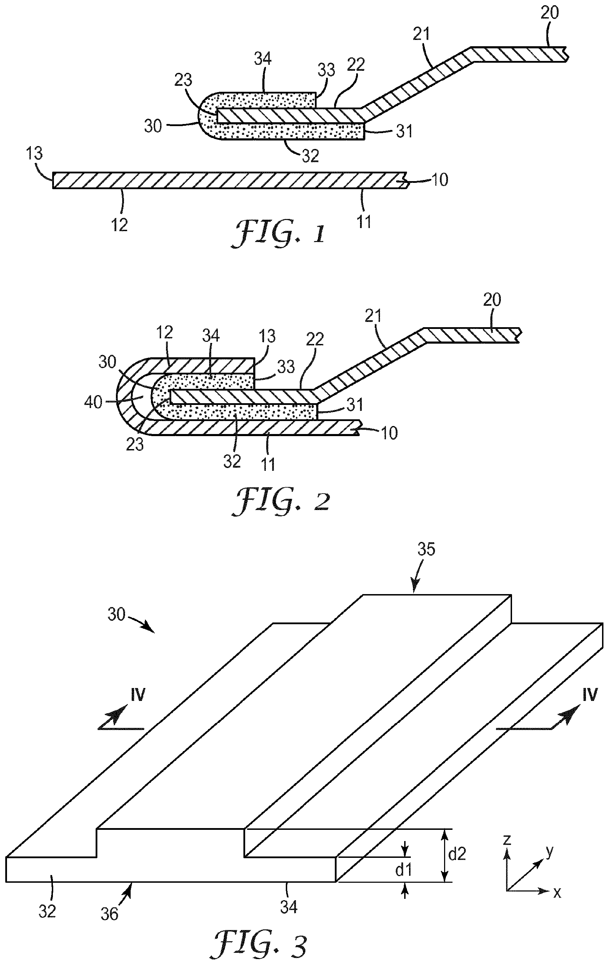

In Figure 1 and Figure 2 two panels, e. g. metal panels, with a structural adhesive film, are shown, wherein the two panels are joint to each other (in Figure 2) through a hem flange connection.

As shown in Figure 1, an outer metal panel 10 comprises a body portion 11 with a flange 12 along a margin of the body portion near end 13 of the outer panel 10. An inner metal panel 20 comprises a body portion 21 with a flange portion 22 along a margin of the body portion near end 23 of the inner panel. As can be seen in Figure 2 in the hem flange bonding process the flange 12 is folded over flange 22 of the inner panel 20. End 23 of the inner panel 20 is adjacent flange 12 of the outer panel. A structural adhesive film 30 is located between the inner panel 20 and the outer panel 10. A portion 32 near end 31 of the structural adhesive film 30 is located between body portion 11 of the outer panel 10 and the flange 22 of the inner panel 20. The structural adhesive film 30 with an end 31 and an end 32 is folded in the hemming process over the inner panel 20 and hence portion 34 near end 33 of the structural adhesive film 30 is located between end portion 12 of the outer panel 10 and the flange 22 of the inner panel 22. The structural adhesive film 30 bonds the two metal panels together at the joint or hem.

The tape 30 may be applied to the inner panel 20 and then be folded around its end 23 before it is brought in contact with the outer panel or it may be applied to the outer panel 10 first and bend around the end 23 of the inner panel 20 together with the outer panel 10.

Depending on the geometry of the hem, there are configurations, where the tape 30 does not completely fill the gap between the inner panel 20 and the outer panel 10. Such a configuration is shown in Figure 2. Next to the structural adhesive film 30 a gap or space 40 exists between the tape 30 and the bend flange 12 of the outer panel 10. The gap may also exist in other positions like for example between the tape 30 and the end 23 of the inner panel 20 (not shown). If a gab exists and the size of the gab depends on certain factors like for example the tolerances for a hem flange connection and the geometry of the hem flange itself.

As shown in Figure 2, the structural adhesive film 30 is adhered to the inner panel. In one particular aspect, the structural adhesive film 30 may have a surface that is tacky at ambient temperature, typically about 20°C, and can be adhered to the inner panel 20 via this tacky surface. The structural film may allow forming an adhesive bond sufficient to hold the panels together in the metal joint without requiring curing of the composition of the structural adhesive film. It is also possible that the structural adhesive film is heated before curing below the curing temperature to initiate the above mentioned tack and/or to be smoothened to conform to the geometry of the end 23 of the inner panel 20.

The outer panel 10 may then be folded such that the flange 12 of the outer panel is folded over the flange 22 of the inner panel 20 and over portion 34 of the structural adhesive film 30. Accordingly, outer panel 10 will be folded over inner panel 20 with the structural adhesive film located between the two panels and this a metal joint is obtained. In case the structural adhesive film 30 was adhered to the outer panel 10 instead of the inner panel 20, the structural adhesive film 30 will be folded in between the panels during folding of the outer panel 10 over flange 22 of the inner panel 20.

In case the structural adhesive film 30 is pre-formable, the structural adhesive film 30 is pre-formed in for example a u-shaped form and afterwards applied to the inner panel 20, thereby covering its outer edge 23, before the outer panel 10 is folded around the outer edge 23 of the first panel.

Usually a panel assembly of a vehicle that needs to get painted follows a body in white process, which includes among other steps, steps of cleaning and e-coating. In both steps the panel assembly gets entered into baths. In these process steps the possibility exists that fluids enter the metal panel assembly and especially the region of the hem flange connection. It may for example stay within the gap 40 shown in Figure 2. If the panel assembly afterwards gets heated in an e-coat oven, the fluid gets vaporized. The thereby produces gas tries to escape, e. g. through the structural adhesive film 30, which is not yet cured. This may lead to bubbles and/or pinholes in the structural adhesive film 30 which may be visible after cure at the outer edge 13 of the outer panel 10. This may not be acceptable for car manufactures.

The invention now proposes a structural adhesive film according to claim 1.

Figure 3 is a three-dimensional view of an embodiment of a structural adhesive film 30 according to the invention. The film extends in a longitudinal direction y and in a cross direction x as well as in a third direction z. If the structural adhesive film 30 is provided in the form of a tape the extension in the longitudinal direction y is much larger than the extension in the cross direction x. According to the invention the extension in the z direction of the tape varies such that more material is provided in areas where more material is needed such as for example in the middle section of the film 30

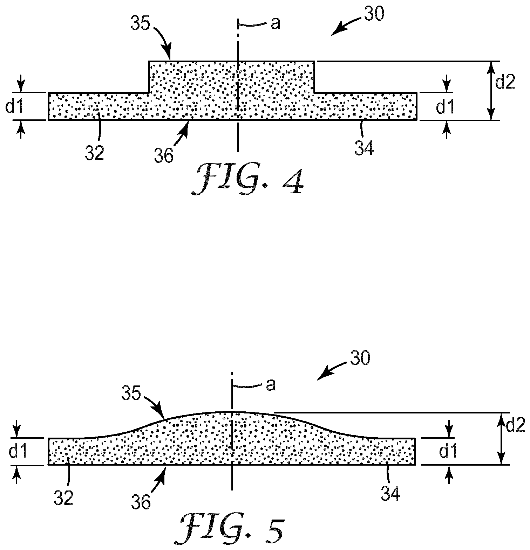

Figure 4 is a cross-sectional view of the structural adhesive film 30 not according to the invention shown in Figure 3 along the line IV-IV. The structural adhesive film 30 provides a symmetrical shape relative to the dotted line a in the middle of the cross-section. It provides an upper major surface 35 and a lower major surface 36. Both surfaces extend over the complete width of the film 30 in the cross-section shown in Figure 4. The upper major surface 35 provides a stepped shape and the lower major surface 36 provides a straight or linear shape. The distance between the two surfaces 35 and 36 therefore varies along the cross direction x of the tape 30. The distance d1 is smaller at its two outer ends and larger at its middle end d2. In the embodiment shown in Figure 4 the distance d2 is double of the distance d1.

Figure 5 is a cross-sectional view of not another embodiment of the invention. The structural adhesive film 30 provides a symmetrical shape relative to the dotted line a in the middle of the cross-section shown in Figure 5. It provides an upper major surface 35 and a lower major surface 36. Both surfaces extend over the complete width of the film 30 in its cross direction. The upper major surface 35 provides a continuous, sinus-curved shape and the lower major surface 36 provides a straight or linear shape. The distance between the two surfaces 35 and 36 therefore varies along the cross direction x of the tape 30. The distance d1 is smaller at the outer end of the film 30 as in its middle, where the distance is d2. d1 may be about double of the distance d2. Any other relation between the two distances is possible as well as long as d2 is 10% larger than d1.

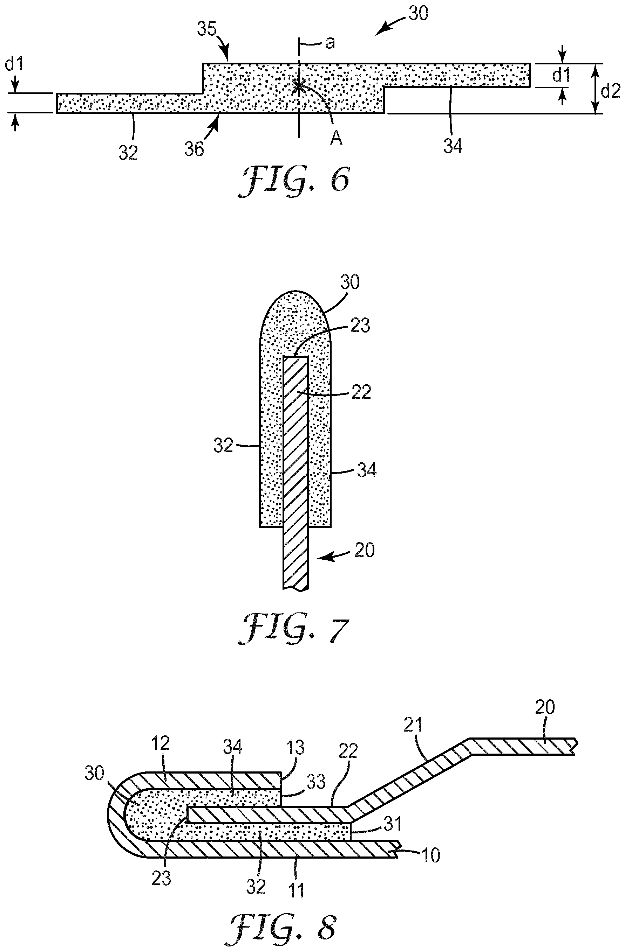

Figure 6 is a cross-sectional view of not another embodiment of the invention. The structural adhesive film 30 provides a symmetrical shape relative to the point A on the dotted line a in the middle of the cross-section. It provides an upper major surface 35 and a lower major surface 36. Both surfaces extend over the complete width of the film 30 in the cross-section shown in Figure 6. The upper surface 35 provides a stepped shape and the lower major surface 36 provides a stepped shape. The distance between the two surfaces 35 and 36 varies over the cross-section of the tape 30 from a smaller distance d1 to a larger distance d2 and back to a smaller distance d1. In this specific embodiment shown in Figure 6 the distance d2 is double of the distance d1.

Figure 7 shows the flange portion 22 with the end 23 of the inner panel 20 and the structural adhesive film 30 folded around the end 23. The structural adhesive film 30 may for example provide the geometry of any of films shown in Figures 4, 5 or 6 A portion 34 of the structural adhesive film 30 is located at one side of the flange portion 22 and a portion 32 is located at the opposite side of the flange portion 22. The middle portion of the structural adhesive film 30, which is positioned between the two portions 34 and 32 is located at the end 23 of the inner panel. The middle portion is the portion of the structural adhesive tape that has a greater diameter d2 between its outer surfaces. Thus, a greater amount of material of the structural adhesive film is provided in the area of the end 23 of the inner panel 10.

In a hem flange application, this greater amount of material can be used to fill any gap that may exist between the two panels 10 and 20 as shown in Figure 8. By filling the gap between the two panels 10 and 20, intrusion of water, during e. g. cleaning and e-coating processes, can be prevented, which also prevents the generation of gas during a following heating process. All these prevention steps lead to a better visual appearance of the cured structural adhesive tape 30.

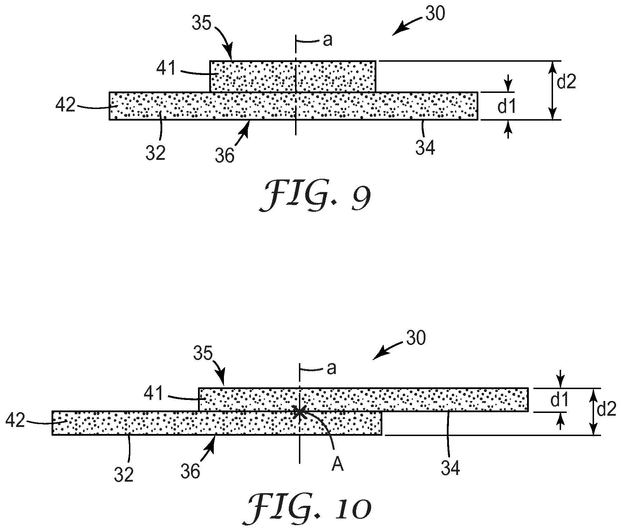

Figure 9 is a cross-sectional view of another embodiment of a structural adhesive film 30 according to the invention. It differs from the embodiment shown in Figure 4 in that it provides two layers 41 and 42 of a structural adhesive film 30. The width of the layer 41 is smaller than the width of the layer 42. The layer 41 is arranged on top of the layer 42. It is arranged in the middle of the layer 42.

Figure 10 is a cross-sectional view of not another embodiment of a structural adhesive film 30 according to the invention. It differs from the embodiment shown in Figure 6 in that it provides two layers 41 and 42 of a structural adhesive film 30. The widths of the layers 41 and 42 are equal. The layer 41 is arranged on top of the layer 42. It is arranged staggered in relation to layer 42.

## Claims

1. A structural adhesive film, comprising
at least one adhesive layer,
the adhesive layer comprising at least one epoxy compound and at least one epoxy curing agent;
the film further providing a major upper surface (35) as well as an opposing major lower surface (36),
and the film having an extension in a longitudinal direction (y) which is larger than its extension in a cross direction (x) wherein
in a cross-sectional view of the film the distance between the two opposing major surfaces (35 and 36) varies along the extension of the cross direction (x) such that the film provides at least two distances between the opposing major surfaces, a first distance d1 and a second distance d2, wherein the distance d2 is at least 10% larger than the distance d1; and
wherein the at least one adhesive structural film (30) further comprises a thermoplastic resin and a toughening agent;
wherein the film (30) provides a second adhesive layer (41) extending adjacent to the first adhesive layer (42); and
wherein in a cross sectional view the width of the second adhesive layer (41) is smaller than the width of the first adhesive layer (42).

2. The structural adhesive film according to claim 1, wherein the distance between the two opposing major surfaces (35 and 36) changes stepwise or continuously along the cross direction (x) of the film (30).

3. The structural adhesive film according to any of the preceding claims, wherein the distance d1 ranges from 100 to 400 µm and the distance d2 ranges from 110 to 800 µm.

4. The structural adhesive film according to any of the preceding claims, wherein the area where the distance between the two major surfaces 35 and 36 corresponding to the larger distance d2 is arranged in the middle of the cross-section of the film.

5. The structural adhesive film according to any of the claims 1 to 3, wherein the area where the distance between the two major surfaces (35 and 36) corresponding to the larger distance d2 is arranged at one side of the cross-section of the film (30).

6. The structural adhesive film according to any of the preceding claims, wherein the composition of the first adhesive layer (41) is the same as the composition of the second adhesive layer (42).

7. The structural adhesive film according to any of the preceding claims, wherein the film (30) further comprises at least one layer with a porous structure.

8. The structural adhesive film according to any of the preceding claims, wherein the at least one adhesive layer further comprises, a thermoplastic resin and at least one component comprising at least one epoxy moiety and at least one linear or branched alkyl group and/or at least one mineral filler, wherein the at least one mineral filler is capable of absorbing water.

9. The structural adhesive film according to any of the preceding claims, wherein the at least one adhesive layer further comprises an acrylic polymer.

10. The structural adhesive film according to any of the preceding claims, wherein the at least one adhesive layer comprises a toughening agent and/or a blowing agent.

11. A method of bonding panels together to form a panel assembly, the method comprising the following steps:
- providing a first and a second panel;
- providing a structural adhesive film according to any of the preceding claims;
- adhering said first panel and said second panel to each other by using the structural adhesive film at a first temperature below the activation temperature of the structural adhesive film; and
heating the panel assembly at a second temperature above the activation temperature of the structural adhesive film.

12. Use of a structural adhesive film according to claims 1 to 10 for bonding panels together to form a panel assembly, wherein the panels are bond to each other through a hemmed structure and wherein the structural adhesive film is positioned between the two panels in the hemmed structure and fills the space between the two panels in the hemmed structure before the structural adhesive film is cured.

## Patentansprüche

1. Eine Strukturklebefolie, umfassend
mindestens eine Klebeschicht,
die Klebeschicht umfassend mindestens eine Epoxidverbindung und mindestens einen Epoxidhärter;
wobei die Folie ferner eine obere Hauptoberfläche (35) sowie eine gegenüberliegende untere Hauptoberfläche (36) bereitstellt
und wobei die Folie eine Erstreckung in eine Längsrichtung (y) aufweist, die größer als ihre Erstreckung in eine Querrichtung (x) ist, wobei
in einer Querschnittsansicht der Folie der Abstand zwischen den zwei gegenüberliegenden Hauptoberflächen (35 und 36) entlang der Erstreckung in Querrichtung (x) variiert, so dass die Folie mindestens zwei Abstände zwischen den gegenüberliegenden Hauptoberflächen bereitstellt, einen ersten Abstand d1 und einen zweiten Abstand d2, wobei der Abstand d2 mindestens 10 % größer als der Abstand d1 ist; und
wobei die mindestens eine Strukturklebefolie (30) ferner ein thermoplastisches Harz und einen Elastifikator umfasst;
wobei die Folie (30) eine zweite Klebeschicht (41) bereitstellt, die sich angrenzend an die erste Klebeschicht (42) erstreckt; und
wobei in einer Querschnittsansicht die Breite der zweiten Klebeschicht (41) kleiner als die Breite der ersten Klebeschicht (42) ist.

2. Die Strukturklebefolie nach Anspruch 1, wobei sich der Abstand zwischen den zwei gegenüberliegenden Hauptoberflächen (35 und 36) schrittweise oder kontinuierlich entlang der Querrichtung (x) der Folie (30) ändert.

3. Die Strukturklebefolie nach einem der vorstehenden Ansprüche, wobei der Abstand d1 im Bereich von 100 bis 400 µm liegt und der Abstand d2 im Bereich von 110 bis 800 µm liegt.

4. Die Strukturklebefolie nach einem der vorstehenden Ansprüche, wobei der Bereich, in dem der Abstand zwischen den zwei Hauptoberflächen 35 und 36 dem größeren Abstand d2 entspricht, in der Mitte des Querschnitts der Folie angeordnet ist.

5. Die Strukturklebefolie nach einem der Ansprüche 1 bis 3, wobei der Bereich, in dem der Abstand zwischen den zwei Hauptoberflächen (35 und 36) dem größeren Abstand d2 entspricht, auf einer Seite des Querschnitts der Folie (30) angeordnet ist.

6. Die Strukturklebefolie nach einem der vorstehenden Ansprüche, wobei die Zusammensetzung der ersten Klebeschicht (41) die gleiche wie die Zusammensetzung der zweiten Klebeschicht (42) ist.

7. Die Strukturklebefolie nach einem der vorstehenden Ansprüche, wobei die Folie (30) ferner mindestens eine Schicht mit einer porösen Struktur umfasst.

8. Die Strukturklebefolie nach einem der vorstehenden Ansprüche, wobei die mindestens eine Klebeschicht ferner ein thermoplastisches Harz und mindestens einen Bestandteil, umfassend mindestens eine Epoxyeinheit und mindestens eine lineare oder verzweigte Alkylgruppe und/oder mindestens einen Mineralfüllstoff, umfasst, wobei der mindestens eine Mineralfüllstoff in der Lage ist, Wasser zu absorbieren.

9. Die Strukturklebefolie nach einem der vorstehenden Ansprüche, wobei die mindestens eine Klebeschicht ferner ein Acrylpolymer umfasst.

10. Die Strukturklebefolie nach einem der vorstehenden Ansprüche, wobei die mindestens eine Klebeschicht einen Elastifikator und/oder ein Treibmittel umfasst.

11. Ein Verfahren zum Verbinden von Platten miteinander, um eine Plattenbaugruppe zu bilden, das Verfahren umfassend die folgenden Schritte:
- Bereitstellen einer ersten und einer zweiten Platte;
- Bereitstellen einer Strukturklebefolie nach einem der vorstehenden Ansprüche;
- Verkleben der ersten Platte und der zweiten Platte miteinander durch Verwenden der Strukturklebefolie bei einer ersten Temperatur unterhalb der Aktivierungstemperatur der Strukturklebefolie; und
Erwärmen der Plattenbaugruppe auf eine zweite Temperatur oberhalb der Aktivierungstemperatur der Strukturklebefolie.

12. Verwenden einer Strukturklebefolie nach Anspruch 1 bis 10 zum Verbinden von Platten miteinander, um eine Plattenbaugruppe zu bilden, wobei die Platten durch eine Saumstruktur miteinander verbunden werden und wobei die Strukturklebefolie zwischen den zwei Platten in der Saumstruktur positioniert wird und den Raum zwischen den zwei Platten in der Saumstruktur füllt, bevor die Strukturklebefolie gehärtet wird.

## Revendications

1. Film adhésif structural, comprenant
au moins une couche adhésive,
la couche adhésive comprenant au moins un composé époxy et au moins un agent de durcissement d'époxy ;
le film fournissant en outre une surface supérieure principale (35) ainsi qu'une surface inférieure principale opposée (36),
et le film ayant une extension dans une direction longitudinale (y) qui est plus grande que son extension dans une direction transversale (x) dans lequel
dans une vue en coupe transversale du film la distance entre les deux surfaces principales opposées (35 et 36) varie le long l'extension de la direction transversale (x) de telle sorte que le film fournit au moins deux distances entre les surfaces principales opposées, une première distance d1 et une seconde distance d2, dans lequel la distance d2 est au moins 10 % plus grande que la distance d1 ; et
dans lequel l'au moins un film structural adhésif (30) comprend en outre une résine thermoplastique et un agent de ténacité ;
dans lequel le film (30) comporte une seconde couche adhésive (41) s'étendant de manière adjacente à la première couche adhésive (42) ; et
dans lequel dans une vue en coupe transversale la largeur de la seconde couche adhésive (41) est plus petite que la largeur de la première couche adhésive (42).

2. Film adhésif structural selon la revendication 1, dans lequel la distance entre les deux surfaces principales opposées (35 et 36) change par paliers ou de façon continue le long de la direction transversale (x) du film (30).

3. Film adhésif structural selon l'une quelconque des revendications précédentes, dans lequel la distance d1 va de 100 à 400 µm et la distance d2 va de 110 à 800 µm.

4. Film adhésif structural selon l'une quelconque des revendications précédentes, dans lequel la zone où la distance entre les deux surfaces principales 35 et 36 correspond à la plus grande distance d2 est agencée au milieu de la coupe transversale du film.

5. Film adhésif structural selon l'une quelconque des revendications 1 à 3, dans lequel la zone où la distance entre les deux surfaces principales (35 et 36) correspond à la plus grande distance d2 est agencée au niveau d'un côté de la coupe transversale du film (30).

6. Film adhésif structural selon l'une quelconque des revendications précédentes, dans lequel la composition de la première couche adhésive (41) est identique à la composition de la seconde couche adhésive (42).

7. Film adhésif structural selon l'une quelconque des revendications précédentes, dans lequel le film (30) comprend en outre au moins une couche avec une structure poreuse.

8. Film adhésif structural selon l'une quelconque des revendications précédentes, dans lequel l'au moins une couche adhésive comprend en outre, une résine thermoplastique et au moins un composant comprenant au moins un fragment époxy et au moins un groupe alkyle linéaire ou ramifié et/ou au moins une charge minérale, dans lequel l'au moins une charge minérale est capable d'absorber de l'eau.

9. Film adhésif structural selon l'une quelconque des revendications précédentes, dans lequel l'au moins une couche adhésive comprend en outre un polymère acrylique.

10. Film adhésif structural selon l'une quelconque des revendications précédentes, dans lequel l'au moins une couche adhésive comprend un agent de ténacité et/ou un agent d'expansion.

11. Procédé de liaison de panneaux l'un à l'autre permettant de former un ensemble de panneaux, le procédé comprenant les étapes suivantes :
- fourniture d'un premier et d'un second panneau ;
- fourniture d'un film adhésif structural selon l'une quelconque des revendications précédentes ;
- adhésion dudit premier panneau et dudit second panneau l'un à l'autre en utilisant le film adhésif structural à une première température en dessous de la température d'activation du film adhésif structural ; et
chauffage de l'ensemble de panneaux à une seconde température au-dessus de la température d'activation du film adhésif structural.

12. Utilisation d'un film adhésif structural selon les revendications 1 à 10 permettant de lier des panneaux l'un à l'autre pour former un ensemble de panneaux, dans laquelle les panneaux sont liés l'un à l'autre par l'intermédiaire d'une structure ourlée et dans laquelle le film adhésif structural est positionné entre les deux panneaux dans la structure ourlée et remplit l'espace entre les deux panneaux dans la structure ourlée avant que le film adhésif structural ne soit durci.
